Europäisches Patentamt

(19) European Patent Office

Office européen des brevets

(11) Numéro de publication: **0 020 702**
**B1**

(12) **FASCICULE DE BREVET EUROPEEN**

(45) Date de publication du fascicule du brevet:
**31.08.83**

(21) Numéro de dépôt: **80900092.0**

(22) Date de dépôt: **28.12.79**

(86) Numéro de dépôt international:
**PCT/FR 79/00133**

(87) Numéro de publication internationale:
**WO 80/01370 (10.07.80 Gazette 80/15)**

(51) Int. Cl.³: **B 60 T 17/08,** F 16 D 65/56,
B 60 T 17/16

(54) **CYLINDRE DE FREIN A DEUX PISTONS.**

(30) Priorité: **29.12.78 FR 7836892**

(43) Date de publication de la demande:
**07.01.81 Bulletin 81/1**

(45) Mention de la délivrance du brevet:
**31.08.83 Bulletin 83/35**

(84) Etats contractants désignés:
**AT CH DE GB SE**

(56) Documents cités:
**DE-A-2 105 662**
**DE-A-2 164 864**
**FR-A-2 011 416**

(73) Titulaire: **WABCO WESTINGHOUSE EQUIPEMENTS
FERROVIAIRES S.A., 2 boulevard Westinghouse, Sevran
(Seine-Saint-Denis) (FR)**

(72) Inventeur: **DALIBOUT, Georges, 44 rue Jules Guesde,
F-93220 Gagny (FR)**
Inventeur: **GRENIER, Michel, 17 rue du Clos Richard,
77400 Dampmart (FR)**

(74) Mandataire: **Joly, Jean Jacques et al, CABINET BEAU DE
LOMENIE 55, rue d'Amsterdam, F-75008 Paris (FR)**

Cylindre de frein à deux pistons

La présente invention se rapporte à un cylindre de frein à fluide sous pression et à ressort(s) du type comportant un piston de service actionné par le fluide sous pression et un piston de frein à ressort(s) (pour le frein de parc et/ou de secours) maintenu en position desserrée par la pression du fluide agissant à l'encontre de la force de réaction du ressort.

Les freins à ressort(s) sont bien connus et notamment les dispositifs de freinage du type comprenant un frein de service à air comprimé combiné avec un frein à ressort maintenu desserré par une pression d'air comprimé pendant la marche du véhicule. Indépendamment du risque de déclenchement intempestif du frein à ressort en cas de rupture du flexible d'alimentation du cylindre à ressort, l'inconvénient principal de ces freins combinés, qui par ailleurs présentent une excellente modérabilité pour le frein de service, réside dans le fait que l'effort de réaction du ressort qui applique le frein de parc et de secours, diminue rapidement lors de la course de détente du ressort. Cette course présente souvent des valeurs importantes pour rattraper: les jeux inévitables existant dans la timonerie de freinage et entre les garnitures et les pistes de freinage, ainsi que l'élasticité de la timonerie de freinage sous l'effet des efforts d'application importants de ces garnitures sur les pistes. On constate ainsi dans de nombreux cas qu'après plusieurs années de service des freins à ressort, l'effort de réaction du ressort, diminué par la corrosion et le fluage de l'acier à ressort resté sous contrainte au cours du temps, n'atteint plus, en position de freinage, que des valeurs comprises entre la moitié et le tiers de l'effort de réaction initial maximal calculé.

Pour pallier ces inconvénients, il apparait que l'on peut soit éviter de maintenir le ressort sous contrainte, ce qui a déjà été réalisé et présente divers inconvénients pour la sécurité de freinage de secours, soit prendre des dispositions pour limiter la course de détente du ressort, lorsqu'il applique le frein de parc et/ou de secours.

Un moyen pour obtenir la limitation de la course d'un cylindre principal sans limiter l'effort de freinage qu'il peut appliquer, est décrit dans le brevet FR-A-2 011 416. Selon ce brevet, un cylindre de frein double comporte, d'une part, un piston d'application des garnitures de freinage sur des roues d'un véhicule ferroviaire et, d'autre part, un piston de serrage des freins disposé sur le même axe. Un dispositif d'accouplement comportant un écrou vissé sur une tige à filetage réversible du piston d'application et des surfaces coniques de blocage, accouple mécaniquement le piston de serrage au piston d'application dès que le piston de serrage est actionné. L'écrou est rappelé par un ressort continuellement au contact de la surface conique de blocage du piston de serrage.

L'un des buts de la présente invention est précisément de mieux utiliser l'effort de réaction du ressort précontraint en appliquant certains des moyens connus d'accouplement entre deux cylindres de frein coaxiaux.

A cet effet, le cylindre de frein à fluide sous pression et à ressort(s) du type comportant un piston de frein de service actionné par la pression du fluide et un piston de frein à ressort(s) pour le frein de parc et/ou de secours maintenu en position desserrée par une pression de desserrage du fluide agissant à l'encontre de la force de réaction du ressort, le piston à ressort étant susceptible de transmettre au piston de service, tout ou partie de l'effort de réaction du ressort, par l'intermédiaire d'une surface de transmission portée par le piston à ressort(s) et venant en appui sur un organe récepteur du piston de service, des moyens étant prévus pour augmenter l'effort de réaction du ressort et sa durée de vie en limitant sa course de détente, est caractérisé en ce que, de manière connue en soi, l'organe récepteur est mobile le long d'une tige solidaire du piston de service et est repoussé en direction de la surface de transmission du piston à ressort par un ressort de rappel dit «de butée» en appui sur ce piston à ressort, en ce que l'organe récepteur est maintenu à faible distance de cette surface de transmission, lorsque le piston à ressort est repoussé en position de recul par la pression de desserrage, par l'appui de l'organe récepteur, sur un poussoir de butée, lui-même en appui sur le corps du cylindre et en ce que, de façon connue en soi également, l'organe récepteur est un écrou à filets réversibles, vissé sur la tige solidaire du piston du frein de service, la surface de transmission portée par le piston à ressort et verrouillée en rotation par rapport au corps du cylindre et/ou la surface de contact conjuguée ménagée sur cet écrou comportant des moyens de verrouillage tels que des surfaces coniques et/ou des dentures de crabot, pour rappeler l'organe récepteur sur une butée sensiblement fixe par rapport au corps du cylindre et maintenir ainsi, indépendamment des déplacements axiaux du piston de service, ledit organe récepteur à faible distance de la surface de transmission, lorsque le piston à ressort est en position de recul extrême sous l'action de la pression de desserrage, de telle sorte que le déplacement axial du piston à ressort, à partir de sa position de recul et sous l'action du ressort, d'une valeur supérieure à ladite distance, provoque la mise en contact de la surface de transmission avec une surface de contact conjuguée de l'organe récepteur et le verrouillage axial de celui-ci par rapport au piston de service qui est alors solidarisé axialement avec le piston à ressort lui transmettant un effort d'actionnement du freinage.

De préférence, la course du piston à ressort avant son appui sur le corps du cylindre est limitée à une faible valeur telle que celle nécessaire pour maintenir appliqué l'effort maximal de freinage de parc ou de secours déjà appliqué par le frein de service et/ou pour effectuer une course d'application élastique d'un supplément éventuel de l'effort de freinage de manière à ne pas provoquer l'actionnement du frein par le piston de frein à ressort en cas de déclenchement intempestif de ce frein à ressort, lorsque le frein de service n'est pas actionné.

Selon un autre mode de réalisation de l'invention, le poussoir est susceptible, d'une part, lorsque le piston à ressort est repoussé en butée extrême sur le corps du cylindre par la pression de desserrage de frein à ressort, de venir en appui sur le corps du cylindre sous l'action d'un ressort de rappel en appui sur le piston à ressort et, d'autre part, d'être entrainé par une surface de butée du piston à ressort, lorsque ce piston se déplace en position active repoussé par son ressort et après application de la surface de transmission sur la surface de contact conjuguée de l'écrou.

Selon une autre variante de réalisation, la surface de transmission qui est portée par le piston à ressort, est solidaire d'un manchon tournant librement par rapport à ce piston mais verrouillé en rotation par rapport au corps du cylindre par l'intermédiaire d'un crabotage constitué d'une couronne de verrouillage munie de dent(s) ou de crabot(s) et coopérant avec une autre couronne de même type solidaire en rotation du corps du cylindre et repoussé par un ressort de rappel en direction de la couronne de verrouillage.

Une tige de desserrage manuel peut être reliée mécaniquement au poussoir de butée pour permettre de tirer ce poussoir à l'encontre d'un ressort de rappel et d'amener un épaulement de déverrouillage de ce poussoir de butée au contact de l'autre couronne pour provoquer à l'encontre du ressort de rappel de cette autre couronne le déverrouillage en rotation des dents ou crabots de la couronne de verrouillage par rapport à l'autre couronne et libérer ainsi le manchon en rotation pour autoriser alors la rotation du manchon en appui sur l'écrou à filets réversibles et, par voie de conséquence, la détente du ressort et, par suite de la libre rotation de cet écrou sur les filets de la tige solidaire du piston de service soumis à l'effort de réaction de la timonerie de freinage, le desserrage manuel du frein à ressort.

Le crabotage entre les deux couronnes de verrouillage peut être unidirectionnel et provoquer l'immobilisation en rotation du manchon dans le sens assurant l'entraînement de l'écrou à filets réversibles par le piston à ressort, tandis que la denture à cliquet d'au moins l'une des couronnes autorise la rotation du manchon dans l'autre sens en repoussant le ressort de rappel de l'autre couronne pour permettre le recul du piston à ressort sous l'action de la pression de desserrage avec mise en rotation de l'écrou à filets réversibles dans les phases où l'écrou à filets réversibles et le manchon sont solidaires au moins en rotation.

Selon un mode de réalisation simplifié, la surface de transmission et de verrouillage est prévue directement ou rigidement solidaire du piston à ressort qui est verrouillé en rotation par rapport au corps du cylindre par tout moyen approprié tel que des cannelures.

Lorsque le cylindre de frein selon l'invention comporte un doigt de verrouillage rotatif télécommandé apte à bloquer axialement par rapport au corps du cylindre un prolongement axial du piston de frein à ressort en position de desserrage pour maintenir ce piston inactif après disparition de la pression de desserrage du frein à ressort, et à libérer ce piston pour provoquer un freinage de parc et/ou de secours, le prolongement axial peut contenir le ressort de rappel du poussoir de butée et la partie de ce poussoir soumise à l'action du ressort de rappel.

D'autres buts, avantages et caractéristiques de la présente invention apparaîtront à la lecture de la description qui va suivre faite à titre non limitatif et en regard du dessin où:
- la fig. 1 est une vue en coupe axiale d'un premier mode de réalisation de l'invention et,
- la fig. 2 est une vue similaire d'un second mode de réalisation.

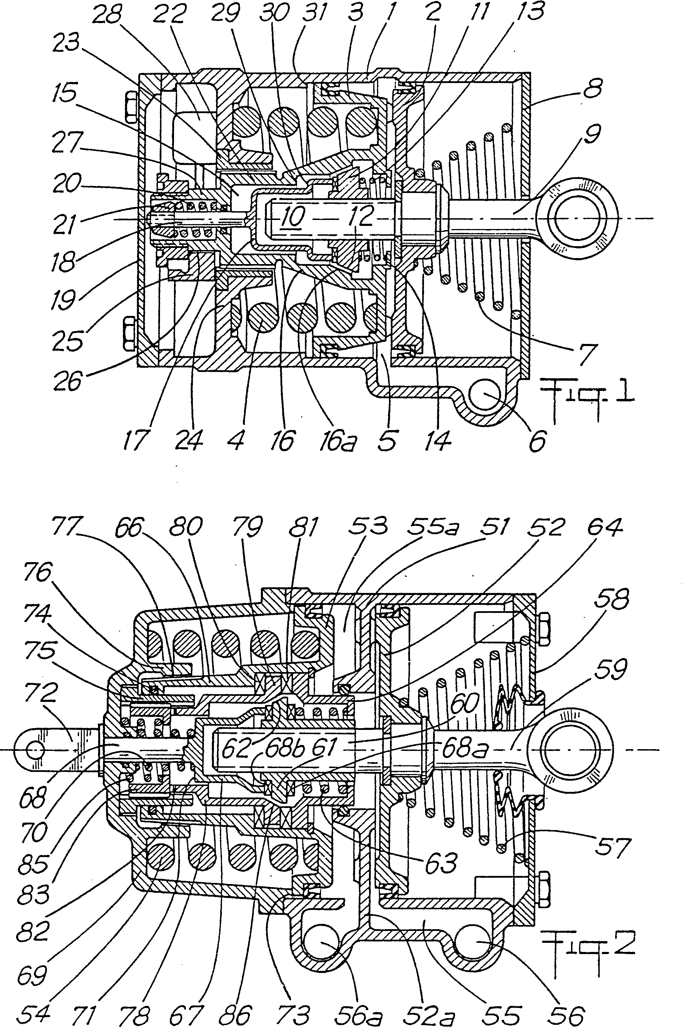

La fig. 1 représente un cylindre de freinage dont le corps principal 1 contient un piston de service 2 affecté au freinage de service et un piston à ressort 3 repoussé vers la droite de la figure par un puissant ressort précontraint 4. Une chambre interne 5 délimitée entre les deux pistons est reliée à une valve de commande du freinage non représentée par un raccord 6. Un ressort de rappel 7 est disposé entre le piston de service 2 et un couvercle 8 fermant le corps 1 à droite.

Le piston de service 2 est solidaire d'une tige 9 d'actionnement d'une timonerie de freinage non représentée. Du côté opposé au piston 2, la tige 9 se prolonge par une tige 10 à filets réversibles sur lesquels est vissé un écrou 11 doté d'une face conique externe 12. L'écrou 11 est maintenu en position axiale sensiblement fixe par l'intermédiaire de butées, éventuellement à billes et de ressorts. La butée de droite est constituée par un ressort 13 interposé entre l'écrou 11 et une coupelle 14 fermant une chambre 15 de la partie centrale en forme de manchon 16 du piston à ressort 3. La butée élastique de gauche est constituée par un petit manchon 17 en appui à sa droite sur une butée à aiguille.

Le manchon 17 est prolongé vers sa gauche par une tige de butée 18 venant en appui contre un couvercle 19, fermant à gauche le corps de cylindre 1, sous l'action d'un ressort de rappel 20 interposé entre le manchon 16 du piston à ressort et une bague de retenue 21 vissée sur la tige 18. Le manchon 16 a une partie en forme de bague 22 cannelée extérieurement et qui renferme la tige de butée 18 et le ressort de rappel 20. La bague 22 coulisse dans l'alésage cannelé correspondant d'un palier 23 fixé dans un alésage correspondant d'une cloison 24 du corps du cylindre.

La chambre délimitée entre le couvercle 19 et la cloison 24 porte des organes de verrouillage du piston à ressort 3, notamment une gachette transversale 25 coopérant, d'une part, avec une gorge 26 ménagée dans un prolongement 27 de la bague cannelée 22 et, d'autre part, avec la tige d'un piston de commande actionné par un cylindre électropneumatique 28.

Le manchon 16 comporte à l'intérieur de la chambre 15 une surface de transmission et de verrouillage 16a, de forme conique intérieure et apte à coopérer avec la face conique 12 de l'écrou 11 dont elle est éloignée d'une faible distance en position de recul du piston 3 telle que représentée. Le manchon 16 du piston 3 présente aussi une surface interne de butée 29 apte à venir porter contre un épaulement correspondant 30 du petit manchon 17 dont elle est éloignée à l'état de repos d'une distance supérieure à la faible distance précitée. L'alésage dans lequel se déplace le piston 3 présente un épaulement 31 de butée d'arrêt pour le recul du piston à ressort 3 sous l'action de la pression régnant dans la chambre 5.

Le dispositif décrit à la fig. 1 fonctionne de la manière qui va maintenant être explicitée. En marche normale du véhicule sans freinage, les pièces mobiles du cylindre occupent les positions représentées sur la fig. 1. La chambre 5 est reliée à l'atmosphère et le piston de desserrage à ressort 3 est maintenu en position de recul à une faible distance de sa butée d'arrêt 31 par la gachette 25 qui est enclenchée dans la gorge 26. Le ressort 4 est comprimé et le piston de freinage de service 2 est rappelé en butée contre le piston de desserrage 3 par son ressort de rappel 7.

Quand le conducteur du véhicule équipé de cylindres de frein selon l'invention décide d'effectuer un freinage de service, il fait délivrer par l'intermédiaire d'un robinet ou d'une électrovalve modérable non représenté une pression d'air comprimé de freinage de service dans la chambre 5. Le frein à friction est alors actionné par le piston 2 qui se déplace vers la droite, alors que le piston de desserrage 3 reste inactif mais en réserve. En effet, le piston 2 en se déplaçant vers la droite entraîne sa tige 10 dont les filets réversibles provoquent la rotation de l'écrou 11 entre ses butées à billes sous l'action de rappel vers la gauche du ressort 13 en appui sur le piston 3 fixe. L'écrou 11 tourne librement pour rester en position sensiblement fixe par rapport au corps 1 tout en se maintenant continuellement en butée sur le petit manchon 17, les surfaces coniques conjuguées 12 et 16a restant à faible distance l'une de l'autre. Au desserrage des freins, la pression diminue dans la chambre 5 et le piston de service 2 recule vers la gauche de la fig. 1 sous l'effet de la réaction élastique de la timonerie de freinage. Au cours de ce recul du piston 2 vers la gauche, la tige 10 repousse l'écrou 11 vers la gauche en appui sur la butée à billes interposée entre cet écrou et le petit manchon 17 et l'écrou 11 tourne sur la tige 10 pour se maintenir en position sensiblement fixe par rapport au corps 1.

Pour réaliser un freinage de parc du véhicule, on l'immobilise par un freinage de service de la façon qui vient d'être indiquée en exerçant la pression de freinage maximale, par exemple en coupant le courant de l'électrovalve modérable de contrôle des freins pour provoquer un serrage d'urgence des freins. Sous l'effet de la pression maximale ainsi obtenue dans la chambre 5, le piston 3 recule sur sa butée arrière 31, ce qui soulage la gachette 25 de l'effort axial d'appui normalement exercé sur lui par le ressort 4. Il suffit ensuite de désexciter l'électrovalve de commande du cylindre électropneumatique 28 pour repousser la gachette 25 vers le bas de la fig. 1. Le frein est alors armé pour le freinage de parc.

Le piston à ressort 3, qui n'agit pas encore sur le frein à friction, est désormais prêt à intervenir pour relayer l'action du piston 2. En effet, si la conduite d'alimentation en fluide du raccord 6 présente une fuite notable, la pression régnant dans la chambre 5 tombe au-dessous d'une valeur pour laquelle le piston à ressort 3 se déplace vers la droite pour amener la surface de transmission 16a en contact avec la face conique 12 de l'écrou 11 et l'immobiliser en rotation par coincement en lui transmettant un effort d'actionnement vers la tige filetée 10 par l'intermédiaire des filets réversibles.

Le piston 3 transmet l'effort du ressort 4 après avoir parcouru seulement une course égale à la faible distance axiale existant entre la surface de transmission 16a et la face conique conjuguée 12 de l'écrou 11. Au cours de cette très faible course de détente, l'effort de réaction du ressort diminue très peu. Il est même possible de réduire la contrainte du ressort 4 comprimé de façon permanente en butée sur la gachette 25. Il suffit pour cela de choisir un ressort 4 de grande longueur et de plus faible diamètre de fil et de comprimer ce ressort à spires presque jointives au montage du cylindre et du piston 3.

Dans le mode de réalisation selon l'invention, l'encombrement axial du ressort de freinage 4 est minimal car ce ressort reste comprimé presque à bloc et se détend seulement de quelques millimètres pour assurer un freinage de parc ou de secours se substituant directement au freinage de service. On peut bien entendu remplacer le ressort 4 par plusieurs ressorts parallèles ou concentriques sans changer le principe de l'invention.

Pour desserrer un freinage de parc, il suffit de remettre en pression maximale la chambre 5. Le piston 3 revient au contact de sa butée 31 et en excitant l'électrovalve du cylindre 28, on peut à nouveau engager la gachette 25 dans la gorge 26 pour verrouiller axialement le piston à ressort 3. Pendant la mise en pression de la chambre 5, les surfaces coniques conjuguées 12 et 16a se séparent sans rotation de l'écrou 11 après mise en appui de celui-ci sur le petit manchon 17 lui-même en appui sur le couvercle de gauche 19 du corps 1. On doit noter, à ce sujet, que, si pour une raison quelconque (par exemple le refroidissement des roues freinées au cours d'une longue période de freinage de parc), le piston 3 peut effectuer une course faible mais néanmoins sensible vers la droite pour maintenir appliqué l'effort maximal de freinage de parc ou de secours, la surface de butée 29 vient en appui sur l'épaulement 30 du petit manchon 17 et l'entraîne vers la droite à l'encontre du ressort de rappel 20, tout en se maintenant à distance de l'écrou 11 qui a suivi le déplacement du piston 3 vers la droite. Pour terminer le desserrage du freinage de parc, le conducteur du véhicule provoque la mise à l'échappement de la chambre 5. Sous l'action des forces de réaction de la timonerie de freinage et du ressort 7, la tige de piston 9 et son piston 2 sont rappelés vers la gauche de la fig. 1 et, comme pour un desserrage du frein de service, la tige 10 en se déplaçant vers la gauche provoque la rotation de l'écrou 11 qui se maintient constamment en appui sur le petit manchon 17.

La fig. 2 représente un cylindre de freinage 51 dont le corps principal contient un piston de service 52 affecté au freinage de service et un piston à ressort 53 repoussé vers la droite de la figure par un ressort 54. Une chambre interne 55 délimitée par le piston 52 et une cloison 52a est reliée par un raccord 56 à une valve non représentée pour la commande du frein de service. Une seconde chambre interne 55a délimitée par la cloison 52a et le piston à ressort 53 est alimentée en fluide sous pression à partir d'un raccord 56a. Un ressort de rappel 57 est interposé entre le piston de service 52 et un couvercle 58 fermant le corps 51 vers la droite.

Le piston de service 52 est relié rigidement à une tige de commande 59 destiné à être raccordée à une timonerie de freinage non représentée. Du côté opposé au piston 52, la tige 59 se prolonge par une tige 60 à filets réversibles, sur lesquels est vissé un écrou 61 présentant une face conique externe 62. Comme l'écrou 11, l'écrou 61 est maintenu en position axiale sensiblement fixe par l'intermédiaire de deux butées roulantes repoussées par des butées élastiques. La butée de droite est constituée par un ressort 63 interposé entre une butée à aiguille 68a et une coupelle 64 qui est solidaire du piston à ressort 53 et qui traverse de façon étanche la cloison 52a pour fermer la chambre 55 délimitée par la partie centrale en forme de manchon 66 du piston à ressort 53. La butée élastique de gauche est constituée par un petit manchon 67 en appui à droite sur l'écrou 61 par l'intermédiaire d'une butée à aiguille 68b. Le petit manchon 67 est prolongé à gauche par une tige 68, coulissant de façon étanche dans un alésage d'un couvercle 69 (fermant le corps de cylindre 51 vers la gauche) à l'encontre de l'effort d'un ressort de rappel 70 interposé entre le couvercle 69 et un épaulement 71 du petit manchon 67. La tige 68 est prolongée par une chape 72 à l'extérieur du couvercle 69 qui est centré sur le corps du cylindre par un épaulement 73 et vient comprimer le ressort 54. Le manchon 66 du piston à ressort 53 peut coulisser d'une manière étanche, grâce à un joint 74, sur une bague 75 solidaire du couvercle 69 mais est bloqué en rotation par rapport à ce couvercle 69 à l'aide d'un prolongement circulaire interne 76 de ce couvercle, muni de cannelures 77, coopérant avec des cannelures correspondantes du manchon 66.

Entre les manchons 66 et 67 est disposé un manchon ou fourreau 78 centré à gauche à l'intérieur de la bague 75 et à droite à l'intérieur du manchon 66 par l'intermédiaire d'une collerette 79 maintenue axialement entre le manchon 66 et la coupelle 64 par l'intermédiaire de deux butées à aiguilles 80 et 81. Le bord de gauche du fourreau 78, centré à l'intérieur de la bague 75 est porteur de dents de crabot 82, aptes à coopérer avec des dents correspondantes portées par une couronne 83 coulissant à l'intérieur de la bague 75 par l'intermédiaire de cannelures et repoussée au contact du fourreau 78 par un ressort de rappel 85.

Le fourreau 78 porte intérieurement au niveau de sa collerette 79 une surface conique 86 de transmission et de verrouillage apte à coopérer avec la face conique 62 de l'écrou 61.

Le crabotage entre les dents 82 du fourreau 78 et celles de la couronne 83 sous l'action du ressort de rappel 85 est unidirectionnel dans le sens assurant l'entraînement de l'écrou à filets réversibles 61 par le ressort du piston 53 mais la denture à deux faces (face droite et face inclinée) d'au moins l'une des couronnes autorise la rotation du manchon 78 dans l'autre sens pour laisser tourner l'écrou 61 et réarmer le frein à ressort.

Le dispositif décrit à la fig. 2 fonctionne de la façon suivante. En service normal sur un véhicule roulant, le raccord 56 est relié à l'atmosphère tandis qu'une pression de fluide introduite dans la chambre 55a par le raccord 56a repousse le piston 53 contre l'épaulement 73 à l'encontre de la force de réaction du ressort 54. Le manchon 66 solidaire du piston à ressort 53 maintient vers la gauche, par les butées à billes 80 et 81, le fourreau intérieur 78 et maintient ainsi à distance de la face conique 62 la surface conique intérieure 86 portée par ce fourreau 78.

Pour assurer un freinage de service, le raccord 56 est alimenté par une pression de fluide tandis que le raccord 56a reste sous pression. Sous l'action de la pression de freinage de service régnant dans la chambre 55, le piston 52 se déplace alors vers la droite en entraînant axialement la tige 60 qui provoque, comme dans la fig. 1, la rotation de l'écrou 61 entre ses butées à aiguilles 68a et 68b alors fixes. Le desserrage du frein de service s'effectue de la même façon que pour la fig. 1.

Le freinage de parc est assuré de la façon suivante. Le conducteur du véhicule déclenche un freinage de service à la pression maximale dans la chambre de service 55, puis met à l'échappement la chambre 55a du frein à ressort.

Le piston 53 se déplace alors vers la droite sous l'action du ressort 54 et entraîne le fourreau 78 et sa surface conique 86. La couronne cannelée 83 maintenue au contact des dents 82 du fourreau 78 par le ressort de rappel 85 qui repousse la couronne 83 vers la droite, se maintient bloquée en rotation par rapport au corps 51 du cylindre par l'intermédiaire des cannelures de la bague 75 solidaire du couvercle 69.

L'écrou 61 est à son tour entraîné vers la droite, lorsque les faces coniques 62 et 86 entrent en contact. Le fourreau 78, immobilisé en rotation par rapport au corps 51, bloque l'écrou 61 en rotation par coincement entre les faces 62 et 86. La tige 60 est ainsi poussée vers la droite par le piston à ressort 53 sans que ce piston à ressort 53 n'ait à parcourir la course de serrage normal déjà effectuée par le piston 52. La course du piston à ressort 53 est alors égale au jeu axial entre les faces 62 et 86 majoré de la course d'application élastique du supplément éventuel de l'effort de freinage.

Pour limiter l'effort de commande du freinage sur la tige 59, le conducteur peut alors mettre à l'échappement la chambre 55 par le raccord 56. Le cylindre de frein 51 assure le freinage de parc par le piston 52 poussé par le seul ressort 54 du piston à ressort 53. A la différence du cas de la fig. 1, les efforts de freinage de service par fluide et de parc à ressort peuvent être séparés ou additionnés selon le cas mais jamais soustraits.

Le desserrage du freinage de parc est obtenu par le conducteur du véhicule en remettant sous pression de fluide le raccord 56a indépendamment de la pression régnant dans la chambre de service 55.

Un desserrage manuel de secours est possible, par exemple pour déplacer en atelier un véhicule dont la réserve de fluide comprimé est épuisée et ne permet plus de remettre le raccord 56a sous pression.

Ce desserrage s'obtient par traction manuelle sur la chape 72 vers la gauche de la fig. 2. L'épaulement 71 du manchon 67 déplace vers la gauche la couronne 83 et décrabote ainsi cette couronne du fourreau 78 qui peut alors tourner librement avec l'écrou 61 sur le filetage réversible de la tige 60. Le ressort 54 repousse le piston 53 vers la droite jusqu'à ce qu'il vienne en butée sur la cloison médiane 52a du corps de cylindre 51. Dans le même temps, l'effort de réaction exercé vers la gauche sur la tige 59 repousse la tige 60 vers la gauche en faisant tourner l'écrou 61 et le fourreau 78 qui lui est alors solidaire, ce qui annule l'effort d'application des freins exercé auparavant par le piston 52 qui revient en position inactive de recul tel que représenté à la fig. 2.

Le réarmement automatique du frein à ressort après un desserrage manuel s'obtient de la façon suivante. On provoque la réalimentation du raccord 56a en fluide sous pression. Le piston à ressort 53 est alors repoussé vers la gauche jusqu'à sa butée 73 et comprime le ressort 54 tout en ramenant le fourreau 78 et la couronne cannelée 83 vers leur position d'origine représentée sur le dessin. L'écrou 61 se sépare du fourreau 78 et poussé par le ressort 63 se dévisse sur la tige 60 en direction de la gauche. Le crabotage entre le fourreau 78 et la couronne 83 étant inopérant dans ce sens de rotation de l'écrou et du fourreau 78, celui-ci peut, en cas de besoin, tourner de quelques dents par rapport à la couronne 83. L'écrou vient finalement s'immobiliser axialement sur le petit manchon 67 en position d'armement pour réaliser un nouveau freinage de parc.

Le présent dispositif peut fonctionner en frein de secours ou d'urgence dans l'éventualité d'un freinage de service insuffisant. La mise à l'échappement de la chambre de desserrage 55a permet la détente du frein à ressort dont l'action s'ajoute à celle du frein de service.

Bien entendu, la présente invention n'est nullement limitée au contenu de la description qui précède et elle est susceptible de nombreuses modifications et de variantes accessibles à l'homme de l'art, sans que l'on s'écarte de l'esprit de l'invention.

Ainsi, l'on peut utiliser plusieurs ressorts parallèles ou concentriques à la place du ressort unique 4 ou 54 et ces ressorts peuvent, à la différence de ceux utilisés habituellement pour les freins à ressort, présenter des efforts de réaction qui ne décroissent pas linéairement avec la course de détente mais qui croissent par exemple comme le carré de la longueur de compression du ressort. On pourrait également remplacer les ressorts hélicoïdaux représentés pour les ressorts 4 et 54 par des blocs d'élastomère précontraints au montage du piston à ressort ou du couvercle de fond de cylindre à ressort tel que le couvercle 69. Cette utilisation de ressorts bon marché ou à grande puissance et faible course est rendue possible par la faible course d'application des freins que doit parcourir le piston à ressort avant l'application complète du frein à ressort grâce au rattrapage complet des jeux et de la course élastique effectuée par le piston de frein de service avant l'application du frein à ressort.

On peut également envisager de supprimer le piston de frein de service 52 de la fig. 2 et de considérer uniquement un frein de parc à ressort. Dans un tel frein à ressort, le piston 53 doit alors effectuer la totalité de la course d'application du frein et la chape 72 permet d'obtenir un desserrage manuel du frein avec un réarmement automatique de l'écrou 61 après remise sous pression de la chambre 55a. En supprimant le piston 52, on obtient ainsi un mécanisme destiné à interrompre manuellement et à rétablir automatiquement l'effet d'un organe de transmission de force uniaxial notamment pour un frein à ressort comportant dans un corps, un cylindre à fluide, un piston, un poussoir, un ressort portant sur une première face du piston et le faisant avancer pour le serrage des freins lorsqu'une pression de fluide exercée sur la seconde face du piston dans le cylindre diminue, et un organe de transmission monté entre le piston et le poussoir pour déplacer ce dernier lorsque le piston avance, cet organe étant susceptible, d'une part, d'être libéré de manière à permettre au poussoir de revenir seul vers le piston et, d'autre part, de revenir automatiquement devant le piston après le retour du piston en position inactive, l'organe de transmission comportant un écrou à filetage réversible vissé sur un tronçon fileté correspondant du poussoir et relié en translation au piston par l'intermédiaire de deux portées axiales à faible friction, ledit écrou étant relié, par l'intermédiaire d'un encliquetage empêchant cet écrou de tourner dans le sens de la transmission de l'effort et pouvant être déclenché de l'extérieur, à un élément de l'organe de transmission immobilisé en rotation, caractérisé en ce que l'encliquetage est monté entre, d'une part, une couronne de réception reliée à l'écrou en rotation et, d'autre part, une couronne de commande fixe en rotation par rapport au corps de l'organe de transmission et mobile axialement dans ce corps pour être appliquée contre la couronne de réception

par un ressort d'application tout en étant susceptible d'être rappelée axialement à l'encontre de ce ressort par un organe de déverrouillage manuel extérieur.

Le cylindre de frein selon l'invention permet de réaliser une protection contre le déclenchement intempestif du frein à ressort. Pour cela il suffit que la course du piston à ressort avant son appui sur le corps du cylindre soit limitée à une valeur faible telle que celle nécessaire pour maintenir appliqué l'effort maximal de freinage de parc ou de secours déjà appliqué par le frein de service et/ou pour effectuer une course d'application élastique d'un supplément éventuel de l'effort de freinage de manière à ne pas provoquer l'actionnement du frein par le piston de frein à ressort en cas de déclenchement intempestif de ce frein à ressort lorsque le frein de service n'est pas actionné. Pour maintenir le frein à ressort inactif après son déclenchement intempestif et au cours de l'actionnement du frein de service, la course finale du piston à ressort avant son appui sur le corps du cylindre provoque la libération permanente et automatique de l'encliquetage.

## Revendications

1. Cylindre de frein à fluide sous pression et à ressort(s) du type comportant un piston de frein de service (2, 52) actionné par la pression du fluide et un piston de frein à ressort(s) (3, 53) (pour le frein de parc et/ou de secours) maintenu en position desserrée par une pression de desserrage du fluide agissant à l'encontre de la force de réaction du ressort (4, 54), le piston à ressort (3, 53) étant susceptible de transmettre au piston de service (2, 52) tout ou partie de l'effort de réaction du ressort (4, 54) par l'intermédiaire d'une surface de transmission (16a, 86) portée par le piston à ressort(s) (3, 53) et venant en appui sur un organe récepteur (11, 61) du piston de service, des moyens étant prévus pour augmenter l'effort de réaction du ressort et sa durée de vie en limitant sa course de détente,
caractérisé en ce que l'organe récepteur (11, 61) est mobile le long d'une tige (10, 60) solidaire du piston de service (2, 52) et est repoussé en direction de la surface de transmission (16a, 86) du piston à ressort (3, 53) par un ressort de rappel (13, 63) dit «de butée» en appui sur ce piston à ressort (3, 53), en ce que l'organe récepteur (11, 61) est maintenu à faible distance de cette surface de transmission (16a, 86), lorsque le piston à ressort (3, 53) est repoussé en position de recul par la pression de desserrage, par l'appui de l'organe récepteur (11, 61) sur un poussoir de butée (17, 67), lui-même en appui sur le corps (1, 52) du cylindre et
en ce que l'organe récepteur est un écrou (11, 61) à filets réversibles, vissé sur la tige (10, 60) solidaire du piston du frein de service (2, 52), la surface de transmission (16a, 86) portée par le piston à ressort (3, 53) et verrouillée en rotation par rapport au corps (1, 51) du cylindre et/ou la surface de contact conjuguée (12, 62) ménagée sur cet écrou (11, 61) comportant des moyens de verrouillage tels que des surfaces coniques et/ou des dentures de crabot, pour rappeler l'organe récepteur (11, 61) sur une butée (17, 67) sensiblement fixe par rapport au corps (1, 51) du cylindre et maintenir ainsi, indépendamment des déplacements axiaux du piston de service (2, 52), ledit organe récepteur (11, 61) à faible distance de la surface de transmission (16a, 86), lorsque le piston à ressort (3, 53) est en position de recul extrême sous l'action de la pression de desserrage, de telle sorte que le déplacement axial du piston à ressort (3, 53), à partir de sa position de recul et sous l'action du ressort (4, 54), d'une valeur supérieure à ladite faible distance, provoque la mise en contact de la surface de transmission (16a, 86) avec une surface de contact conjuguée (12, 62) de l'organe récepteur (11, 61) et le verrouillage axial de celui-ci par rapport au piston de service (2, 52) qui est alors solidarisé axialement avec le piston à ressort (3, 53) lui transmettant un effort d'actionnement du freinage.

2. Cylindre de frein selon la revendication 1, caractérisé en ce que le poussoir de butée (17) est susceptible, d'une part, lorsque le piston à ressort (3) est repoussé en butée extrême sur le corps (1) du cylindre par la pression de desserrage du frein à ressort, de venir en appui sur le corps du cylindre sous l'action d'un ressort de rappel (20) en appui sur le piston à ressort (3) et, d'autre part, d'être entraîné par une surface de butée (29) du piston à ressort (3), lorsque ce piston se déplace en position active repoussé par son ressort (4) et après application de la surface de transmission (16a) sur la surface de contact conjuguée (12) de l'écrou (11).

3. Cylindre de frein selon la revendication 2, comportant un doigt de verrouillage rotatif télécommandé apte à bloquer axialement par rapport au corps du cylindre un prolongement axial du piston de frein à ressort en position de desserrage pour maintenir ce piston inactif après disparition de la pression de desserrage du frein à ressort, et à libérer ce piston pour provoquer un freinage de parc et/ou de secours, caractérisé en ce que le prolongement axial (27) contient le ressort de rappel (20) du poussoir de butée (17) et la partie (18, 21) de ce poussoir soumise à l'action du ressort de rappel (20).

4. Cylindre de frein selon l'une des revendications 1 à 3, caractérisé en ce que la surface de transmission et de verrouillage (16a) est prévue directement ou rigidement solidaire du piston à ressort (3) qui est verrouillé en rotation par rapport au corps (1) du cylindre par tout moyen approprié tel que des cannelures (22, 23).

5. Cylindre de frein selon la revendication 1, caractérisé en ce que la surface de transmission (86) qui est portée par le piston à ressort (53), est solidaire d'un manchon (78) tournant librement par rapport à ce piston (53) mais verrouillé en rotation par rapport au corps (51) du cylindre par l'intermédiaire d'un crabotage constitué d'une couronne de verrouillage munie de dent(s) ou de crabot(s) (82) et coopérant avec une autre couronne (83) de même type solidaire en rotation du corps (51) du cylindre et repoussée par un ressort de rappel (85) en direction de la couronne de verrouillage.

6. Cylindre de frein selon la revendication 5, caractérisé en ce qu'une tige de desserrage manuel (68) est reliée mécaniquement au poussoir de butée (67) pour permettre de tirer ce poussoir à l'encontre d'un ressort de rappel (70) et d'amener un épaulement de déverrouillage (78) de ce poussoir de butée (67) au contact de l'autre couronne (83) pour provoquer à l'encontre du ressort de rappel (85) de cette autre couronne le déverrouillage en rotation des dents ou crabots (82) de la couronne de verrouillage par rapport à l'autre couronne (83) et libérer ainsi le manchon (78) en rotation pour autoriser alors sa rotation en appui sur l'écrou (61) à filets réversibles et, par voie de conséquence, la détente du ressort (54) et, par suite de la libre rotation de cet écrou (61) sur les filets de la tige (60) solidaire du piston de service (52) soumis à l'effort de réaction de la timonerie de freinage, le desserrage manuel du frein à ressort.

7. Cylindre de frein selon la revendication 6, caractérisé en ce que le crabotage entre les deux couronnes de verrouillage (78, 83) est unidirectionnel et provoque l'immobilisation en rotation du manchon (78) dans le sens assurant l'entraînement de l'écrou (61) à filets réversibles par le piston à ressort (53), tandis que la denture à cliquet (82) d'au moins l'une des couronnes (78, 85) autorise la rotation du manchon (78) dans l'autre sens en repoussant le ressort de rappel (85) de l'autre couronne (83) pour permettre le recul du piston à ressort (53) sous l'action de la pression de desserrage avec mise en rotation de l'écrou (61) à filets réversibles dans les phases ou l'écrou à filets (61) réversibles et le manchon (78) sont solidaires au moins en rotation.

8. Cylindre de frein selon l'une des revendications 1 à 7, caractérisé en ce que la course du piston à ressort (3, 53) avant son appui sur le corps du cylindre (51, 52a) est limitée à une faible valeur telle que celle nécessaire pour maintenir appliqué l'effort maximal de freinage de parc ou de secours déjà appliqué par le frein de service et/ou pour effectuer une course d'application élastique d'un supplément éventuel de l'effort de freinage de manière à ne pas provoquer l'actionnement du frein par le piston de frein à ressort (53) en cas de déclenchement intempestif de ce frein à ressort, lorsque le frein de service n'est pas actionné.

9. Cylindre de frein selon la revendication 8 et dans lequel l'écrou (61) à filets réversibles est relié en position d'application du frein à ressort, par l'intermédiaire d'un encliquetage (82) empêchant cet écrou (61) de tourner dans le sens de la transmission de l'effort et pouvant être déclenché de l'extérieur, à un élément (83) de la surface de transmission (86) immobilisé en rotation, l'encliquetage (82) étant monté entre, d'une part, une couronne de réception (79, 78) reliée à l'écrou (61) en rotation et, d'autre part, une couronne de commande (83) fixe en rotation par rapport au corps (69) du cylindre et mobile axialement dans ce corps (69) pour être appliquée contre la couronne de réception (78, 79) par un ressort d'application (85) tout en étant susceptible d'être rappelée axialement à l'encontre de ce ressort (85) par un organe de déverrouillage manuel extérieur (71, 68, 72), caractérisé en ce que, pour maintenir le frein à ressort inactif après son déclenchement intempestif et au cours de l'actionnement du frein de service, des moyens de butée (71) sont agencés de façon que la course finale du piston à ressort (53) avant son appui sur le corps (52a) du cylindre provoque la libération permanente et automatique de l'encliquetage (82).

## Claims

1. Cylinder for pressurized fluid and spring(s) brake of the type comprising a service brake piston (2, 52) actuated by the pressure of the fluid and a spring brake piston (3, 53) (for the parking and/or emergency brake) kept in a released position by a fluid releasing pressure opposing the reacting force of the spring (4, 54), said spring piston (3, 53) being capable of transmitting to the service piston (2, 52) all or part of the reacting force of the spring (4, 54) via a transmitting surface (16a, 86) borne by the spring piston (3, 53) and being restable on a receiving member (11, 61) of the service brake piston, means being provided to increase the reaction force of the spring and its lasting life by limiting its expanding stroke, characterized in that the receiving member (11, 61) is movable along a rod (10, 60) integral with the service brake piston (2, 52) and is pushed back towards the transmitting surface (16a, 86) of the spring piston (3, 53) by a return spring (13, 63) also called "abutting spring" is resting contact on said spring piston (3, 53), in that the receiving member (11, 61) is held at a short distance from said transmitting surface (16a, 86) when the spring piston (3, 53) is pushed to a backward position by the releasing pressure, by the receiving member (11, 61) resting against an abutting push-member (17, 67), itself resting against the cylinder body (1, 52) and in that the receiving member is a reversible nut (11, 61), screwed on the rod (10, 60) integral with the piston of the service brake (2, 52), the transmitting surface (16, 86) borne by the spring piston (3, 53) and locked in rotation with respect to the body (1, 51) of the cylinder and/or the conjugate contact surface (12, 62) provided on said nut (11, 61) comprising locking means such as conical surfaces and/or dog clutch teeth, to return the receiving member (11, 61) on a stop member (17, 67) which is substantially fixed with respect to the cylinder body (1, 51), and thus to hold the said receiving member 11, 61) at a short distance from the transmitting surface (16a, 86), regardless of the axial movements of the service brake piston (2, 52) and this whenever the spring piston (3, 53) is in a far back position under the action of the releasing pressure, so that the axial movement of the spring piston (3, 53) from its backward position and under the action of the spring (4, 54) over more than the said small distance, causes the transmitting surface (16a, 86) to come into contact with a conjugate contacting surface (12, 62) of the receiving member (11, 61) and the axial locking of the latter with respect to the service brake piston (2, 52) which is then axially fastened with the spring piston (3, 53) transmitting a brake actuating force thereto.

2. Brake cylinder according to claim 1, characterized in that the abutting push-member (17) is capable, on the one hand, when the spring piston (3) is pushed right back in abutment against the cylinder body (1) by the releasing pressure of the spring brake, of resting on to the cylinder body under the action of a return spring (20) resting on the spring piston (3) and, on the other hand, of being driven by an abutting surface (29) of the spring piston (3), when said piston moves to an active position pushed back by its spring (4) and once the transmitting surface (16a) is applied against the conjugate contacting surface (12) of the nut (11).

3. Brake cylinder according to claim 2, comprising a remote-controlled rotary locking member able to axially lock, with respect to the cylinder body, an axial extension of the spring brake piston, in a released position in order to keep this piston inactive once the spring brake releasing pressure has disappeared, and to release this piston and thus cause a parking and/or emergency braking, characterized in that the axial extension (27) contains the return spring (20) of the abutting push-member (17) and the part (18, 21) of said push-member subjected to the action of the return spring (20).

4. Brake cylinder according to one of claims 1 to 3, characterized in that the transmission and locking surface (16a) is designed to be directly or rigidly integral with the spring piston (3) which is locked in rotation with respect to the cylinder body (1) by any appropriate means such as grooves (22, 23).

5. Brake cylinder according to claim 1, characterized in that the transmission surface (86) which is borne by the spring piston (53), is integral with a sleeve (78) which rotates freely with respect to said piston (53) but is locked in rotation with re-. spect to the cylinder body (51) via a dog clutch means constituted by a locking wheel provided with teeth or dog clutches (82) and cooperating with another wheel (83) of the same type fastened in rotation with the cylinder body (51) and pushed back by a return spring (85) towards the said locking wheel.

6. Brake cylinder according to claim 5, characterized in that a hand-operated releasing lever (68) is mechanically connected to the abutting push-member (67) so as to permit to pull this member against the action of a return spring (70) and to bring an unlocking shoulder (78) of said abutting push-member (67) in contact with the other wheel (83) and so to cause, against the action of the return spring (85) of said other wheel, the unlocking in rotation of the teeth or dog clutches (82) of the locking wheel with respect to said other wheel (83) and thus to release the sleeve (78) in rotation, thereby authorising the rotation of the latter whilst supported by the reversible nut (61), and causing as a result the expansion of the spring (54), and, due to the free rotation of said nut (61) on the threads of the rod (60) integral with the engine brake piston (52) subjected to the reaction force of the braking gear, the manual release of the spring brake.

7. Brake cylinder according to claim 6, characterized in that the dog cluth system between the two locking wheels (78, 83) is unidirectional and causes the immobilisation in rotation of the sleeve (78) in the direction in which the reversible nut (61) is driven by the spring piston (53), whereas the catch teeth (82) of at least one of the wheels (78, 85) permits the rotation of the sleeve (78) in the other direction by pushing back the return spring (85) of the other wheel (83) in order to push back the spring piston (53) under the action of the releasing pressure and to set the reversible nut (61) in rotation in those phases where the reversible nut (61) and the sleeve (78) are fastened in rotation.

8. Brake cylinder according to one of claims 1 to 7, characterized in that the stroke of the spring piston (3, 53) before it comes to rest on the cylinder body (51, 52a) is limited to a small value such as that necessary to maintain the same maximum force of parking or emergency braking as already applied by the service brake and/or to effect a resilient application stroke to apply an optional supplemental braking force so as not to cause the actuation of the brake by the spring brake piston (53) in case of an inopportune application of said spring brake, when the service brake is not actuated.

9. Brake cylinder according to claim 8 and in which the reversible nut (61) is connected, when the spring brake is applied, via a ratchet mechanism (82) preventing said nut (61) from turning in the direction of transmission of the force and being triggerable from the outside, with an element (83) of the transmission surface (86) immobilized in rotation, said ratchet mechanism (82) being mounted between, on the one hand, a receiving wheel (79, 78) connected to the rotating nut (61) and on the other hand, a control wheel (83) which is fixed in rotation with respect to the cylinder body (69) and axially movable inside said body (69) to be applied against the receiving wheel (78, 79) by way of an applying spring (85) whilst being axially returnable against the action of said spring (85) by an unlocking member (71, 68, 72) hand-operated from the outside, characterized in that, in order to keep the spring brake inactive once it has been inopportunely actuated and whilst the service brake is actuated, stop means (71) are arranged so that the final stroke of the spring piston (53) before it rests against the cylinder body (52a), causes the permanent and automatic release of the ratchet mechanism (82).

## Patentansprüche

1. Druckmittel-Feder-Bremszylinder des Typs mit einem druckmittelbeaufschlagten Betriebsbremskolben (2, 52) und einem Federbremskolben (3, 53) (für die Parkbremse und/oder Notbremse), der durch einen Lösedruck des der Reaktionskraft der Feder (4, 54) entgegenwirkenden Fluidums in Lösestellung gehalten wird, wobei der Federkolben (3, 53) die gesamte oder einen Teil der Reaktionskraft der Feder (4, 54) mittels einer vom Federkolben (3, 53) getragenen Übertragungsfläche (16a, 86) an den Betriebskolben (2, 52) übertragen kann und dabei an einem Aufnahmeelement (11, 61) des Betriebskolbens zum Anliegen kommt, wobei Einrichtungen zur Erhöhung der Reaktionskraft der Feder und ihrer Lebensdauer durch Begrenzung ihres Federweges vorgesehen sind, dadurch gekennzeichnet, dass das Aufnahmeelement (11, 61) entlang einer mit dem Betriebskolben (2, 52) verbundenen Stange (10, 60) beweglich ist und durch eine sich auf diesem Federkolben (3, 53) abstützende «Anschlag»-Rückholfeder (13, 63) in Richtung zur Übertragungsfläche (16a, 86) des Federkolbens (3, 53) zurückgedrückt wird, dass das Aufnahmeelement (11, 61) in einem geringen Abstand von dieser Übertragungsfläche (16a, 86) gehalten wird, wenn der Federkolben (3, 53) unter dem Lösedruck durch Anlage des Aufnahmeelements (11, 61) auf einem Anschlagstössel (17, 67), welcher sich selbst auf dem Körper (1, 52) des Zylinders abstützt, in zurückgeschobene Stellung gedrückt wird, und dass das Aufnahmeelement eine auf der mit dem Betriebsbremskolben (2, 52) verbundenen Stange (10, 60) aufgeschraubte Mutter (11, 61) mit reversiblen Gewindegängen ist, wobei die vom Federkolben (3, 53) getragene und gegenüber dem Körper (1, 51) des Zylinders rotationsgesicherte Übertragungsfläche (16a, 86) und/oder die auf dieser Mutter (11, 61) vorgesehene, zugeordnete Berührungsfläche (12, 62) Verriegelungseinrichtungen, wie konische Oberflächen und/oder formschlüssige Klauenzähne, zum Rückstellen des Aufnahmeelements (11, 61) an einen gegenüber dem Körper (1, 51) des Zylinders im wesentlichen fixen Anschlag (17, 67) und damit Halten des Aufnahmeelements (11, 61) – unabhängig von Axialverschiebungen des Betriebskolbens (2, 52) – in einem geringen Abstand von der Übertragungsfläche (16a, 86) aufweist, wenn sich der Federkolben (3, 53) unter der Wirkung des Lösedrucks in zurückgeschobener Endlage befindet, so dass die ein grösseres Ausmass als der obige geringe Abstand aufweisende Axialverschiebung des Federkolbens (3, 53), ausgehend von seiner zurückgeschobenen Lage und unter der Wirkung der Feder (4, 54), die Berührung der Übertragungsfläche (16a, 86) mit einer zugeordneten Berührungsfläche (12, 62) des Aufnahmeelements (11, 61) bewirkt und dass die axiale Verriegelung desselben gegenüber dem Betriebskolben (2, 52), der dann mit dem Federkolben (3, 53) axial in Verbindung steht, diesem eine Bremsbetätigungskraft überträgt.

2. Bremszylinder nach Anspruch 1, dadurch gekennzeichnet, dass der Anschlagstössel (17) einerseits, wenn der Federkolben (3) auf dem Körper (1) des Zylinders durch den Lösedruck der Federbremse an den Endanschlag zurückgeführt ist, unter der Wirkung einer sich am Federkolben (3) abstützenden Rückholfeder (20) auf dem Körper des Zylinders zur Anlage kommen kann und anderseits, wenn sich dieser Federkolben, durch seine Feder (4) zurückgeführt, in Aktivstellung bewegt und nach Anlage der Übertragungsfläche (16a) an der zugeordneten Berührungsfläche (12) der Mutter (11) durch eine Anschlagfläche (29) des Federkolbens (3) angetrieben werden kann.

3. Bremszylinder nach Anspruch 2 mit einem ferngesteuerten Dreharretierstift zur axialen Blokkierung einer axialen Verlängerung des Federbremskolbens gegenüber dem Zylinderkörper in Lösestellung zur Inaktivhaltung dieses Kolbens nach Auflösen des Lösedrucks der Federbremse und zur Freigabe dieses Kolbens zwecks Bewirkung einer Park- und/oder Notbremsung, dadurch gekennzeichnet, dass die axiale Verlängerung (27) die Rückholfeder (20) des Anschlagstössels (17) und den Teil (18, 21) dieses Stössels, der der Wirkung der Rückholfeder (20) unterworfen ist, enthält.

4. Bremszylinder nach einem der Ansprüche 1 bis 3, dadurch gekennzeichnet, dass die Übertragungs- und Verriegelungsfläche (16a) direkt dem Federkolben (3) zugeordnet oder starr mit ihm verbunden ist, welcher Federkolben gegenüber dem Körper (1) des Zylinders durch jedes geeignete Mittel, wie Nuten (22, 23), rotationsgesichert ist.

5. Bremszylinder nach Anspruch 1, dadurch gekennzeichnet, dass die vom Federzylinder (53) getragene Übertragungsfläche (86) mit einer Muffe (78) verbunden ist, die gegenüber diesem Kolben (53) frei drehbar, aber gegenüber dem Körper (51) des Zylinders mittels einer Klauenkupplung rotationsgesichert ist, welche durch einen mit einem Zahn bzw. Zähnen oder einer Klaue bzw. Klauen (82) versehenen Arretierkranz gebildet ist und mit einem anderen Kranz (83) derselben Art, der mit dem Körper (51) des Zylinders rotationsverbunden und durch eine Rückholfeder (85) in Richtung des Arretierkranzes zurückgedrückt wird, zusammenwirkt.

6. Bremszylinder nach Anspruch 5, dadurch gekennzeichnet, dass eine Stange (68) zum händischen Lösen mit dem Anschlagstössel (67) mechanisch verbunden ist, damit dieser Stössel gegen eine Rückholfeder (70) geführt und eine Entverriegelungsschulter (71) dieses Anschlagstössels (67) in Kontakt mit dem anderen Kranz (83) gebracht werden kann, um gegen die Rückholfeder (85) dieses anderen Kranzes die Rotationsentsicherung der Zähne oder Klauen (82) des Arretierkranzes gegenüber dem anderen Kranz (83) zu bewirken und so die Rotation der Muffe (78) freizugeben, um ihre Rotation auf die Mutter (61) mit reversiblen Gewinden zu übertragen und in der Folge die Entspannung der Feder (54) und aufgrund der freien Rotation dieser Mutter (61) auf den Gewinden der mit dem der Reaktionskraft des Bremsgestänges unterworfenen Betriebskolben (52) verbundenen Stange (60) die händische Lösung der Federbremse zu bewirken.

7. Bremszylinder nach Anspruch 6, dadurch gekennzeichnet, dass die Klauenkupplung zwischen den beiden Arretierkränzen (78, 83) in eine Richtung gerichtet ist und die Rotationshemmung der Muffe (78) in der Richtung bewirkt, die den Antrieb der Mutter (61) mit reversiblen Gewinden durch den Federkolben (53) gewährleistet, wogegen die Sperrzahnung (82) von zumindest einem der Kränze (78, 85) durch Zurückdrücken der Rückholfeder (85) des anderen Kranzes (83) zur Ermöglichung der Rückschiebung des Federkolbens (53) unter der Wirkung des Lösedrucks die Rotation der Muffe (78) in die andere Richtung bewirkt, wobei gleichzeitig die Mutter (61) mit reversiblen Gewinden in den Phasen, in denen die Mutter (61) mit reversiblen Gewinden und die Muffe (78) zumindest rotationsverbunden sind, in Rotation versetzt sind.

8. Bremszylinder nach einem der Ansprüche 1 bis 7, dadurch gekennzeichnet, dass der Hub des Federkolbens (3, 53) vor seiner Anlage an dem Körper des Zylinders (51, 52a) auf einen so geringen Wert beschränkt ist, wie er notwendig ist, um die Beaufschlagung der bereits durch die Betriebsbremse beaufschlagten Maximalkraft der Park- oder Notbremse aufrechtzuhalten und/oder um einen Federbeaufschlagungsweg einer möglichen zusätzlichen Bremskraft zu bewirken, so dass die Betätigung der Bremse durch den Federbremskolben (53) im Falle einer unerwünschten Betätigung dieser Federbremse nicht bewirkt wird, wenn die Betriebsbremse nicht in Betrieb ist.

9. Bremszylinder nach Anspruch 8, bei dem die Mutter (61) mit reversiblen Gewinden in der Beaufschlagungsstellung der Federbremse über eine diese Mutter (61) an einer Drehung in der Kraftübertragungsrichtung hindernde und von aussen lösbare Sperrvorrichtung (82) mit einem rotationsgesicherten Element (83) der Übertragungsfläche (86) verbunden ist, wobei die Sperrvorrichtung (82) zwischen einerseits einem mit der Mutter (61) rotationsverbundenen Aufnahmekranz (79, 78) und anderseits einem Steuerkranz (83) gelagert ist, welcher gegenüber dem Körper (69) des Zylinders rotationsgesichert und im Körper (69) axial beweglich ist, um durch eine Betätigungsfeder (85) gegen den Aufnahmekranz (78, 79) beaufschlagt zu werden, wobei der Steuerkranz (83) jedoch gegen diese Feder (85) durch ein äusseres, händisch betätigbares Entriegelungselement (71, 68, 72) axial zurückgeholt werden kann, dadurch gekennzeichnet, dass zur Ausserbetriebhaltung der Federbremse nach ihrer unerwünschten Betätigung und während der Betätigung der Betriebsbremse Anschlagmittel (71) derart vorgesehen sind, dass der Endhub des Federkolbens (53) vor seiner Anlage am Körper (52a) des Zylinders die permanente und automatische Freigabe der Sperrvorrichtung (82) bewirkt.

Fig. 1

Fig. 2